# EUROPÄISCHE PATENTSCHRIFT

(11) **EP 2 594 396 B1**
(45) Veröffentlichungstag und Bekanntmachung des Hinweises auf die Patenterteilung: **22.08.2018**
(21) Anmeldenummer: 12190784.4
(22) Anmeldetag: 31.10.2012
(51) Int. Cl.: B32B 27/08, B65D 51/22, B65D 65/40, B65D 77/12, C08J 7/04, C09D 183/04, C09D 183/06

(54) **Verbundfolie und daraus hergestellte Verpackungen**
Composite film and packages prepared therefrom
Feuille composite et emballages en étant constitués

(30) Priorität: 15.11.2011 DE 102011086366
(43) Veröffentlichungstag der Anmeldung: 22.05.2013
(73) Patentinhaber: Evonik Degussa GmbH, 45128 Essen (DE)
(72) Erfinder: Luecke, Andreas, 48249 Dülmen (DE); Ebbers, Andre, Dr., 44791 Bochum (DE); Lettmann, Christian, Dr., 48653 Coesfeld (DE)

(56) Entgegenhaltungen:
- EP-A1- 1 505 101
- EP-A1- 1 544 232
- EP-A1- 2 431 034
- DE-A1- 2 137 143
- DE-A1- 3 340 504
- DE-A1-102005 003 162
- DE-A1-102006 060 452
- DE-U1-202005 009 073

## Beschreibung

Die vorliegende Erfindung betrifft Verfahren zum Verpacken unter Einsatz mehrschichtiger Verpackungsfolien mit wenigstens einer Schicht umfassend Thermoplasten, wobei auf der dem Verpackungsgut zugewandten Seite der Verpackungsfolie eine Beschichtung umfassend mindestens ein Silikon aufgebracht ist.

Die Verpackung von Verpackungsgütern gewinnt zunehmende Bedeutung, sei es für Transportzwecke oder zur Lagerung der Verpackungsgüter. Dabei finden sich Verpackungen in allen Bereichen des industriellen und täglichen Bedarfs. So kann es sich bei den Verpackungsgütern um Lebensmittel für den Verkauf an Konsumenten, aber auch um chemische Grundprodukte und Spezialchemikalien handeln. Die Verpackung soll dabei leicht zu öffnen sein, sich aber insbesondere auch rückstandsfrei vom Verpackungsgut entfernen lassen, das heißt das Verpackungsgut soll auch nach längerer Lagerzeit nicht an der Verpackung kleben oder sich mit ihr verbinden. Gleichzeitig soll die Verpackung das Verpackungsgut aber auch vor äußeren Einflüssen schützen, beispielsweise vor der Einwirkung von elektromagnetischer Strahlung, insbesondere UV-Strahlung, oder der Einwirkung von Luft und Feuchtigkeit, die zu einer Alterung des Verpackungsgutes führen können. Gängige Verpackungen basieren auf Folien, wobei es sich häufig um mehrschichtige Folien handelt. Derartige mehrschichtige Folien werden auch als Verbundfolien bezeichnet und sind beispielsweise aus DE 2164461, DE 1932886, DE 2445227, DE 20201655 oder DE 202055009073 bekannt.

Trotz der bekannten Verpackungsmaterialien besteht ein ständiger Optimierungs- und Verbesserungsbedarf, insbesondere hinsichtlich der Eigenschaften der Verpackungsmaterialien. Aufgabe der vorliegenden Erfindung ist die Bereitstellung von Verpackungen für Verpackungsgüter, insbesondere für reaktive Produkte.

Gegenstand der vorliegenden Erfindung ist demgemäß ein Verfahren zum Verpacken von Verpackungsgütern mit Verpackungsfolien mit wenigstens einer Schicht umfassend Thermoplasten, wobei auf der dem Verpackungsgut zugewandten Seite der Verpackungsfolie eine Beschichtung umfassend mindestens ein Silikon aufgebracht ist, zur Verpackung von Verpackungsgütern, welches dadurch gekennzeichnet ist, dass es sich bei dem Silikon um ein (Meth)acrylatgruppen enthaltendes Polysiloxan handelt, wobei ein Beutel oder Schlauch der Verpackungsfolie mit einer vorgegeben Portion des Verpackungsgutes befüllt wird, der Füllvorgang unterbrochen wird und der Beutel oder Schlauch der Verpackungsfolie durch Abquetschen an einem oder beiden Enden verschlossen und verschweißt wird oder ein Beutel oder Schlauch der Verpackungsfolie mit einer vorgegebenen Portion des Verpackungsgutes befüllt wird, der Füllvorgang dabei nicht unterbrochen wird und der Beutel oder Schlauch der Verpackungsfolie durch Abquetschen an einem oder beiden Enden verschlossen, das Verpackungsgut verdrängt und der Beutel oder Schlauch verschweißt wird, wobei die Verpackungsfolie durch Einsatz von Ultraschall verschweißt wird.

Es hat sich überraschend gezeigt, dass das Aufbringen des mindestens einen Silikons auf der dem Verpackungsgut zugewandten Seite der Verpackungsfolie dazu führt, dass diese sich insbesondere rückstandsfrei vom Verpackungsgut entfernen lassen.

Eine Verpackungsfolie weist grundsätzlich zwei Seiten auf, bei seitlicher Betrachtung eine obere und eine untere Seite. Je nach Ausgestaltung der Verpackung kommt eine der beiden Seiten mit dem Verpackungsgut in Berührung, das heißt eine der beiden Seiten ist dem Verpackungsgut zugewandt. Wesentlich im Rahmen der vorliegenden Erfindung ist, dass die dem Verpackungsgut zugewandte Seite der Verpackungsfolie eine Beschichtung umfassend mindestens ein Silikon aufweist.

In der einfachsten Ausführungsform besteht die eingesetzte Verpackungsfolie aus einer Schicht umfassend Thermoplasten auf der mindestens auf einer Seite der Folie mindestens ein Silikon aufgebracht ist. Vorzugsweise handelt es sich bei der eingesetzten Verpackungsfolie um eine mehrschichtige Folie, das heißt ein Verbund aus mehreren Lagen oder Schichten aus unterschiedlichen Materialien (nachfolgend auch Verbundfolie genannt) ist auf einer Seite mit mindestens einem Silikon beschichtet. Bei Verbundfolien handelt es sich in der Regel um mehrlagige bzw. mehrschichtige Folien, bei denen mindestens eine Schicht Thermoplasten umfasst.

Erfindungsgemäß weisen die eingesetzten Verpackungsfolien mindestens zwei Schichten auf, eine Schicht umfassend Thermoplasten und eine Schicht mindestens eines Silikons. Vorzugsweise weisen die eingesetzten Verpackungsfolien mindestens drei Schichten auf, insbesondere vier und mehr Schichten auf.

In einer bevorzugten Ausführungsform der vorliegenden Erfindung weist die Verpackungsfolie zwei Schichten mindestens eines Polymers und eine zwischen den Schichten liegenden Metalllage auf, wobei mindestens eine der zwei Schichten mindestens eines Polymers mindestens einen Thermoplasten umfasst. Es handelt sich also um ein dreischichtiges Basissystem aus zwei Polymerfolien, von denen mindestens eine Schicht Thermoplasten umfasst, und einer Metalllage, die zwischen den genannten zwei Polymerschichten liegt. Diese dreischichtige Verbundfolie ist dann erfindungsgemäß auf der dem Verpackungsgut zugewandten Seite mit mindestens einem Silikon beschichtet. Insgesamt ergibt sich daraus erfindungsgemäß eine Verpackungsfolie mit vier Schichten.
Derartige Verbundfolien und daraus hergestellte Verpackungen haben den Vorteil, dass sie
- wasserdiffusionsdicht sind,
- auch hohen Abfülltemperaturen von mehr als 150 °C thermisch und mechanisch widerstehen,
- Verpackungsgüter, beispielsweise Schmelzklebstoffe, insbesondere auch reaktive Schmelzklebstoffe, nicht daran kleben,
- die Verpackungsgüter, insbesondere Schmelzklebstoffe, sich rückstandsfrei ablösen lassen und
- in einem (kontinuierlichen) Automatisierungsprozess befüllt werden können.

Unter Thermoplasten im Sinne der vorliegenden Erfindung werden Polymere verstanden, die sich in einem bestimmten Temperaturbereich (thermo-plastisch) verformen lassen. Ein Vorteil von Thermoplasten ist deren Schweißbarkeit.

Vorzugsweise ist der Thermoplast ausgewählt aus der Gruppe umfassend Polyolefine, wie beispielsweise Polyethylen (PE) und Polypropylen (PP), Polyamide (PA), Polybutadien, Polyester, Polycarbonate (PC), Polyvinylacetat, thermoplastische Polyacrylamide, Polyacrylnitril (PAN), Polymethylpenten, Polyphenylensulfid, Polyurethane, Styrolacrylonitril, Acrylonitril- Butadien-Styrol (ABS), Styrolbutadien-Gummi, Polyethylenterephthalat (PET). Vorzugsweise werden Polyolefine, insbesondere Polyethylen und Polypropylen, Polyamide und Polyethylenterephthalat als Thermoplast eingesetzt.
Die Schichten der genannten Polymere haben in der Regel eine Dicke von 2 µm bis 1 mm, insbesondere von 4 µm bis 500 µm, bevorzugt von 6 µm bis 200 µm und ganz besonders bevorzugt von 8 µm bis 100 µm.
Bei den oben genannten bevorzugten Ausführungsformen mit mehr als zwei Schichten können die vorab genannten Thermoplasten beliebig miteinander kombiniert werden. In der besonders bevorzugten Ausführungsform mit zwei Schichten mindestens eines Polymers und einer zwischen den Schichten liegenden Metalllage, können auf der jeweiligen Seite der Metalllage gleiche oder unterschiedliche Polymerschichten, insbesondere aus Polyolefinen, vorzugsweise Polyethylen oder Polypropylen, Polyamiden und Polyethylenterephthalat vorliegen.

Die Metalllage (auch Metallfolie genannt) besteht insbesondere aus Leichtmetall, vorzugsweise Aluminium, das heißt zwischen den Polymerschichten liegt vorzugsweise eine Aluminiumfolie. Die Metallfolie hat in der Regel eine Schichtdicke von 2 µm bis 800 µm, insbesondere von 4 µm bis 200 µm, bevorzugt von 5 µm bis 100 µm und ganz besonders bevorzugt von 6 µm bis 50 µm.
In einer weiteren Ausführungsform besteht die Metalllage aus Aluminium, das aus der Dampfphase oder durch (Kathoden-)Zerstäubung aufgebracht wurde.

Ganz besonders bevorzugt weist die erfindungsgemäß eingesetzte Verpackungsfolie folgenden Aufbau auf:
1. Schicht: Silikon
2. Schicht: Polyethylen, Polypropylen, Polyethylenterephthalat, Poylacrylnitril oder Polyamid
3. Schicht: Metalllage, insbesondere Aluminium
4. Schicht: Polyethylen, Polypropylen, Polyethylenterephthalat, Poylacrylnitril oder Polyamid
wobei die 1. Schicht dem Verpackungsgut zugewandt ist.
Ganz besonders bevorzugt sind die 2. und die 4. Schicht aus dem gleichen Material.

Je nach Anwendung kann ein spezieller Aufbau der Verpackungsfolie bevorzugt sein.

Ist für die Anwendung eine sehr geringe Wasserdampfdurchlässigkeit erforderlich, so ist die bevorzugte Ausführungsform dadurch gekennzeichnet, dass das Polymer mindestens einer der beiden Schichten 2. und 4. ausgewählt ist aus Polyethylen, Polypropylen, (amorphem) Polyethylenterephtalat. Besonders bevorzugt beträgt die Dicke mindestens einer der Schichten 2. und 4. zwischen 8 und 200 µm.
Die Metalllage kann in diesem Falle eine bevorzugte Dicke zwischen 6 und 100 µm aufweisen.

Ist für die Anwendung eine hohe Wärmestabilität erforderlich, so ist die bevorzugte Ausführungsform dadurch gekennzeichnet, dass das Polymer mindestens einer der beiden Schichten 2. und 4. ausgewählt ist aus Polyethylenterephtalat, Polyacrylnitril oder Polyamid. Besonders bevorzugt beträgt die Dicke mindestens einer der Schichten 2. und 4. zwischen 8 und 200 µm.

In den bevorzugten erfindungsgemäß eingesetzten mehrschichtigen Verpackungsfolien kann zwischen den einzelnen Schichten ein Haftvermittler vorliegen, der die Haftung der einzelnen Schichten untereinander unterstützt. Vorzugsweise sind auch in der bevorzugten Ausführungsform aus einer beidseitig mit Polymeren beschichteten Metalllage die einzelnen Schichten über Haftvermittler miteinander verbunden.
Als Haftvermittler zwischen den Schichten der mehrlagigen Verpackungsfolie eignen sich insbesondere die üblichen für die Folienlaminierung bekannten Primer, die der Arbeitsweise und den vom Verbund geforderten Eigenschaften entsprechend ausgewählt werden. Beispiele entsprechender Haftvermittler sind Polymerisate und Copolymerisate auf Urethanbasis, polare Gruppen enthaltende Ethylenpolymere oder Polymerisate und Copolymere auf Vinylacetatbasis sowie Polymerisate und Copolymerisate auf Basis von Acrylsäuren.

Wesentlich für den Gegenstand der vorliegenden Erfindung ist, dass auf der dem Verpackungsgut zugewandten Seite eine Beschichtung umfassend mindestens ein Silikon vorliegt. Unter Silikonen (nachfolgend auch Poly(organo)siloxanen) im Sinne der vorliegenden Erfindung werden Polymere verstanden, bei denen Siliziumatome über Sauerstoffatome miteinander verknüpft sind. Bei dem Silikon handelt es sich um (Meth)acrylatgruppen enthaltendes Polysiloxan. Unter strahlenhärtbaren Polysiloxanen werden jene Polysiloxane verstanden, die bei Bestrahlung mit ultravioletter elektromagnetischer Strahlung oder mit Elektronenstrahlen vernetzen können.

Ganz besonders bevorzugt werden als Silikon Polysiloxane mit über SiOC-Gruppen mittel- und endständig oder nur mittelständig gebundene (Meth)acrylsäureester tragende Gruppen der allgemeinen durchschnittlichen Formel (I) eingesetzt 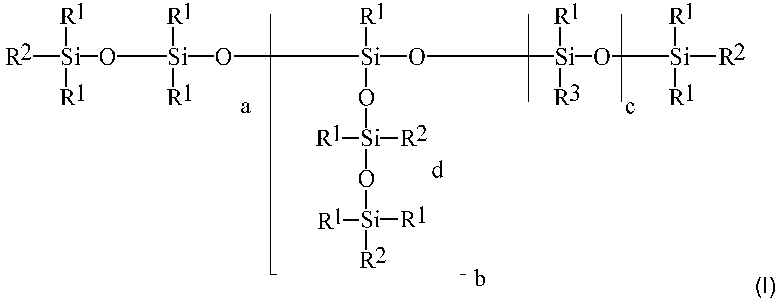 worin
R1 gleiche oder verschiedene Reste, ausgewählt aus linearen oder verzweigten, gesättigten, ein- oder mehrfach ungesättigten Alkyl-, Aryl-, Alkaryl- oder Aralkylresten mit 1 bis 20 Kohlenstoffatomen,
R2 gleiche oder verschiedene Reste R1 oder R3 sind,
R3 gleiche oder verschiedene einfach oder mehrfach (meth)acrylierte Monoalkoxylate oder (meth)acrylierte Polyalkoxylate, oder eine Mischung der einfach oder mehrfach (meth)acrylierten Monoalkoxylate oder Polyalkoxylate mit beliebigen anderen Alkoxylaten, die ausgewählt sind aus der Gruppe der linearen oder verzweigten, gesättigten, ein-oder mehrfach ungesättigten, aromatischen, aliphatisch-aromatischen Mono- oder Polyalkohole, Polyethermonoalkohole, Polyetherpolyalkohole, Polyestermonoalkohole, Polyesterpolyalkohole, Aminoalkohole, insbesondere N Alkyl-, Arylamino-Ethylenoxyd-, -Propylenoxyd-Alkohole, N-Alkyl- oder Arylaminoalkoxylate sowie deren Gemischen, wobei das Verhältnis der einfach oder mehrfach (meth)acrylierten Monoalkoxylate oder Polyalkoxylate zu den beliebigen anderen Alkoxylaten so gewählt wird, dass mindestens ein einfach oder mehrfach (meth)acrylierter Monoalkoxylat- oder Polyalkoxylat-Rest in dem Organopolysiloxan enthalten ist,
a 0 bis 1000, vorzugsweise 0 bis 500, insbesondere 0 bis 300,
b 0 bis 5,
c 1 bis 200, vorzugsweise 2 bis 100, insbesondere 3 bis 80,
d 0 bis 1000, vorzugsweise 0 bis 500, insbesondere 0 bis 300 ist.

Derartige Polysiloxane und Verfahren zu deren Herstellung sind in EP 1544232 beschrieben, deren Inhalt explizit im Umfang der vorliegenden Erfindung mit eingeschlossen ist.

Bevorzugt werden als Polysiloxane Verbindungen der Formel (II) eingesetzt 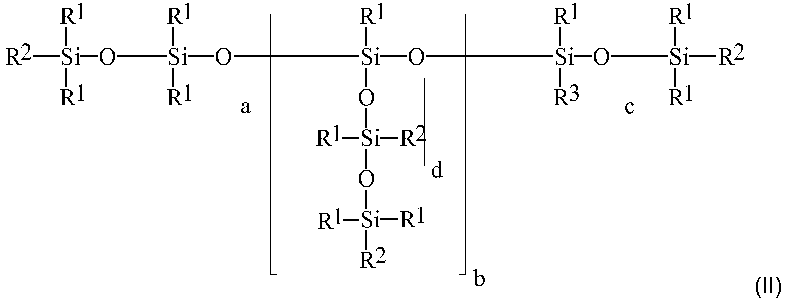 worin
R1 und R2 , lineare oder verzweigte, gesättigte, Alkylreste mit 1 bis 20 Kohlenstoffatomen sind, insbesondere Methyl, Ethyl oder Propyl, ganz besonders bevorzugt Methyl,
R3 gleiche oder verschiedene einfach oder mehrfach (meth)acrylierte Monoalkoxylate oder (meth)acrylierte Polyalkoxylate
a 0 bis 100,
b 0 bis 5
c 3 bis 20
d 0 bis 300 ist.

Beispiele geeigneter Siloxane sind die kommerziell erhältlichen Produkte der Produktlinie TEGO® RC der Firma Evonik Industries AG, insbesondere TEGO® RC 902, TEGO® RC 711, TEGO® RC 715 oder TEGO® RC 351.

Mischungen verschiedener Polysiloxane, die erst nach getrennter Herstellung miteinander gemischt werden, sind ebenfalls möglich.

Einzelne oder Mischungen von entsprechenden Polysiloxanen können in beliebiger Mischung mit beliebig vielen anderen (meth)acrylierten Polysiloxanen nach dem Stand der Technik gemischt werden. Auch Mischungen mit epoxyhaltigen oder vinyletherhaltigen UV-härtenden Silikonen sind möglich.

Des Weiteren können die genannten Polysiloxane oder die genannten Mischungen mit weiteren Hilfs- und Zusatzstoffen nach dem Stand der Technik gemischt werden. Hier sind insbesondere Photoinitiatoren, insbesondere 2-Hydroxy-2-methyl-phenyl-1-propanon, Haftvermittler, Härtungsbeschleuniger, Photosensibilatoren, Antioxidationsmittel, Sauerstofffänger oder organische (meth)acrylgruppenhaltige oder vinylethergruppenhaltige Verbindungen zu nennen. Zusatzstoffe sind des Weiteren Farbstoffe, Pigmente sowie feste teilchenförmige Füllstoffe.

Die Dicke der Beschichtung mit den oben genannten Silikonen liegt in der Regel zwischen 0,1 g/m² und 4 g/m², vorzugsweise zwischen 0,2 und 2 g/m² und ganz besonders bevorzugt zwischen 0,3 und 1 g/m².

Die genannten Silikone, insbesondere Polysiloxane, können nach allen dem Fachmann bekannten Arten aufgebracht werden, insbesondere durch Rollenbeschichtung, Beschichtung mit einem Rakel, Offset-Druck, Gravurdruck, Sprühbeschichtung. Der Beschichtung kann eine Vorbehandlung des Substrates vorausgehen, wie zum Beispiel die Behandlung mit einer Corona-Entladung oder durch Behandlung mit einem Plasma.

Die erfindungsgemäß eingesetzten Verpackungsfolien, insbesondere die bevorzugten Ausführungsformen, zeichnen sich durch eine hohe Stabilität und Dichtigkeit aus. Demgemäß ist ein weiterer Aspektdie Verwendung der Verpackungsfolien zur Verpackung von Verpackungsgütern. Als Verpackungsgüter eignen sich generell alle Produkte des alltäglichen oder industriellen Bedarfs. Beispiele für Produkte des industriellen Bedarfs sind Chemikalien, insbesondere jene, die in entsprechenden Folienverpackungen abgefüllt werden sollen. Eine besonders bevorzugte Art des Verpackungsgutes sind Schmelzklebstoffe jeglicher chemischer Zusammensetzung.

Schmelzklebstoffe sind lösungsmittelfreie Klebstoffe, die in der Wärme und in flüssigem Zustand Werkstoffoberflächen gut benetzen können und an ihnen nach dem Erkalten und Erstarren fest anhaften. Sie bestehen in der Regel aus einem Gemisch von Stoffen, die die adhäsive, die kohäsive und die additive Komponente bilden. Bei der Herstellung werden die Komponenten zusammengeschmolzen und anschließend konfektioniert. Besondere Schwierigkeiten bei der Konfektionierung verursachen die sogenannten Haftschmelzklebstoffe, d. h. Schmelzklebstoffe mit einer Dauerklebrigkeit, die also auch bei Raumtemperatur noch klebrig sind.
Die erfindungsgemäß eingesetzte Verpackungsfolie ist für die Verpackung praktisch jeder Art von Schmelzklebstoffzusammensetzung geeignet. Sie ist von besonderem Vorteil für Schmelzklebstoffe mit ernsten Handhabungsproblemen, z. B. für die bereits oben genannten, auch bei Raumtemperatur noch klebrigen Haftschmelzklebstoffe.

Zum Beispiel kann die erfindungsgemäß eingesetzte Verpackungsfolie zur Verpackung von Schmelzklebstoffen angewandt werden, die hergestellt worden sind aus Polymeren und Copolymeren von synthetischen Harzen, Gummis, Polyethylen, Polypropylen, Polyurethan, Acryl, Vinyl-Acetat, Ethylenvinylacetat und Polyvinylalkohol.

Spezielle Beispiele umfassen nicht-reaktive oder reaktive Schmelzklebstoffe, die aus folgenden Komponenten hergestellt sind:
1) Elastische Polymere wie Block-Copolymere, z. B. Styrol-Butadien, Styrol-Butadien-Styrol, Styrol-Isopren-Styrol, Styrol-Ethylen-Butylen-Styrol, Styrol-Ethylen-Propylen-Styrol;
2) Ethylen-Vinyl-Acetat-Polymere, andere Ethylen-Ester und Copolymere, z. B. Ethylen-Methacrylat, Ethylen-n-Butyl-Acrylat und Ethylen-Acrylsäure;
3) Polyolefine wie Polyethylen und Polypropylen, sowie Co- oder Terpolymere, insbesondere aus Ethylen, Propylen und Buten
4) Polyvinylacetat und Copolymere damit;
5) Polyacrylate;
6) Polyamide;
7) Polyester;
8) Polyvinylalkohole und Copolymere damit;
9) Polyurethane;
10) Polystyrole;
11) Polyepoxide;
12) Copolymere von Vinyl-Monomeren und Polyalkylenoxid-Polymeren;
13) Aldehyde, die Harze enthalten wie Phenol-Aldehyd, Urea-Aldehyd, Melamin-Aldehyd und dergleichen.
14) silanmodifizierte Polymere, insbesondere silanmodifizierte Polyolefine oder Polyether

Weiter können Komponenten zur Verstärkung der Adhäsion, Verdünnungsmittel, Stabilisatoren, Antioxidantien, Farb- und Füllstoffe enthalten sein.
Als Komponenten zur Verbesserung der Adhäsion seien beispielhaft genannt:
1) Natürliche und modifizierte Harze,
2) Polyterpen-Harze,
3) phenolisch modifizierte Kohlenwasserstoff-Harze,
4) aliphatische und aromatische Kohlenwasserstoff-Harze,
5) Phthalat-Ester und
6) hydrierte Kohlenwasserstoffe, hydrierte Harze und hydrierte Harz-Ester.

Als Verdünnungsmittel seien beispielhaft flüssiges Polybuten oder Polypropylen, Petroleumwachse wie Paraffin und mikrokristalline Wachse, halbflüssiges Polyethylen, hydrierte tierische, Fisch- und pflanzliche Fette, Mineralöl und synthetische Wachse sowie Kohlenwasserstoff-Öle genannt.

### Beispiele für die anderen Additive finden sich in der Literatur.

Insbesondere ist das Verpackungsgut ausgewählt aus reaktiven Produkten, bevorzugt handelt es sich um reaktive Schmelzklebstoffe. Unter reaktiven Schmelzklebstoffen im Sinne der vorliegenden Erfindung werden Schmelzklebstoffe verstanden, die zusätzlich nach Auftragen mit den Substratoberflächen reagieren können, beispielsweise durch Einwirkung von Luftfeuchtigkeit. Derartige Klebstoffe sind für besonders hochwertige Klebebindungen geeignet. Sie zeichnen sich durch sehr gute Adhäsionseigenschaften und ausgezeichnete Festigkeiten aus. Sie werden in der Schmelze aufgetragen und reagieren nach dem Erkalten mit der Luftfeuchtigkeit zu hochmolekularen, kaum noch schmelzbaren Verbindungen. Die hohe Endfestigkeit wird erreicht durch die chemische Reaktion freier reaktiver Gruppen mit Oberflächenfeuchtigkeit sowie mit entsprechenden chemischen Gruppen der Substratoberflächen. Daneben zeichnen sie sich durch hohe Chemikalienbeständigkeit, z. B. gegen Druckfarbenöl, sowie durch hohe Temperatur- und Alterungsbeständigkeit aus. Beim Anwender werden die reaktiven, insbesondere feuchtigkeitsvernetzenden Schmelzklebstoffe aufgeschmolzen und in der Regel durch sehr feine Düsen auf das zu verklebende Substrat gesprüht. Ein Verstopfen der Düsen durch bereits mit Feuchtigkeit ausgehärteten Klebstoffpartikeln ist dabei unbedingt zu vermeiden, da dies zu einem Stillstand der Anlage führen würde. Daher müssen diese Klebstoffe vom Hersteller in nahezu absolut feuchtigkeitsdichten Verpackungen bereitgestellt werden, welche eine hohe Lagerbeständigkeit ohne Zutritt von Feuchtigkeit, z. B. Luftfeuchtigkeit, von außen erlauben.

Für die Verpackung der genannten feuchtigkeitsvernetzenden Schmelzklebstoffe eignen sich die gemäß der vorliegenden Erfindung eingesetzten Verpackungsfolien in besonderer Weise. Insbesondere Verpackungsfolien der besonders bevorzugten Ausführungsform mit zwei Schichten mindestens eines Polymers und einer zwischen den Schichten liegenden Metalllage, die auf der dem feuchtigkeitsvernetzenden Schmelzklebstoff zugewandten Seite mit mindestens einem Silikon beschichtet sind, eignen sich in besonders vorteilhafter Weise für den genannten Verwendungszweck. Die bevorzugten Verpackungsfolien sind wasserdiffusionsdicht, sind auch bei hohen Abfülltemperaturen von mehr als 150 °C thermisch und mechanisch stabil, die Schmelzklebstoffe kleben nicht daran und lassen sich rückstandsfrei von der Verpackungsfolie ablösen. Darüber hinaus eignen sich die genannten Verpackungsfolien auch für eine Befüllung in einem (kontinuierlichen) Automatisierungsprozess.

Die erfindungsgemäß eingesetzten Verpackungsfolien werden insbesondere zur Verpackung von Schmelzklebstoffen auf Basis von amorphen Polyalphaolefinen verwendet.

Insbesondere handelt es sich bei den Polyalphaolefinen um ein Homo-, Co- bzw. Terpolymer aus maximal 25 Gew.-%, vorzugsweise 1 bis 22 Gew.-%, besonders bevorzugt 2 bis 20 Gew.-% und insbesondere bevorzugt aus 3 bis 18 Gew.-% Ethen, maximal 95 Gew.-%, vorzugsweise 1 bis 85 Gew.-%, besonders bevorzugt 5 bis 78 Gew.-% und insbesondere bevorzugt 10 bis 75 Gew.-% Propen und/oder 5 bis 100 Gew.-%, vorzugsweise 7 bis 98 Gew.-%, besonders bevorzugt 10 bis 95 Gew.-% und insbesondere bevorzugt 12 bis 90 Gew.-% eines Olefins mit 4 - 10 Kohlenstoffatomen. Insbesondere bevorzugt sind die Polyolefine ausgewählt aus Poly(1-buten), Poly(propylen), Poly(propylen-co-ethylen), Poly(propylen-co-1-buten), Poly(ethylen-co-1-buten) und Poly(ethylen-co-propylen-co-1-buten). Weiterhin bevorzugt sind die Polyolefine teilkristallin, es handelt sich also insbesondere um teilkristalline Poly-alpha-Olefine.
Teilkristalline Polyolefine zeichnen sich dadurch aus, das sie bei der ersten und/oder zweiten Aufheizung in der Differentialkalorimetrie (DSC) bevorzugt mindestens einen Schmelzpeak sowie eine charakteristische Schmelzenthalpie aufweisen, die nicht höher als 50 %, bevorzugt nicht höher als 40 %, besonders bevorzugt nicht höher als 30 % und insbesondere bevorzugt nicht höher als 25 % des theoretisch für rein isotaktisches Polypropylen berechneten Wertes (J. Bicerano; J.M.S.; Rev.Macromol.Chem.Phys.; C38 (1998); 391ff) liegt.

Das Olefin mit 4 bis 10 Kohlenstoffatomen kann in einer besonderen Ausführungsform ausgewählt sein aus der Gruppe umfassend 1-Buten, 1-Penten, 1-Hexen, 1-Octen, 1-Decen, 3-Methyl-1-buten, 3-Methyl-1-hexen, 3-Methyl-1-hepten, 4-Methyl-1-penten und/oder 6-Methyl-1-hepten. Vorzugsweise ist das alpha-Olefin mit 4 bis 10 Kohlenstoffatomen ausgewählt aus der Gruppe umfassend 1-Buten, 1-Hexen und/oder 1-Octen.
Die Herstellung der Co- bzw. Terpolymere erfolgt durch Polymerisation der genannten Monomere in den genannten Mengen.

Die Polyalphaolefine sind beispielsweise durch Polymerisation von Propylen mit Ethylen und/oder 1-Buten und/oder weiteren alpha-Olefinen mit 4 bis 10 Kohlenstoffatomen mit einem TiCb • (AlCl₃)ₙ-Mischkatalysator (n = 0,2 bis 0,5) erhältlich, wobei eine Trialkylaluminiumverbindung als Cokatalysator eingesetzt wird. Das Monomer Ethen wird gasförmig eingesetzt, während die Monomere Propen und 1-Buten sowohl gasförmig als auch flüssig eingesetzt werden können. Als Molmassenregler kann beispielsweise gasförmiger Wasserstoff verwendet werden. Die Polymerisation wird bevorzugt in einem inerten Lösungsmittel durchgeführt, welches z. B. aus der Gruppe der aliphatischen Kohlenwasserstoffe ausgewählt ist. Eine Polymerisation im vorgelegten Monomer ist ebenfalls möglich. Die Reaktionstemperatur liegt zwischen 30 und 200 °C. Die Polymerisate können dem Stand der Technik entsprechend entweder in Form ihrer Reaktionslösung oder zu einem späteren Zeitpunkt chemisch stabilisiert werden, um sie vor dem schädigenden Einfluss z. B. von Sonneneinstrahlung, Luftfeuchtigkeit und Sauerstoff zu schützen. Dabei können beispielsweise Stabilisatoren, die gehinderte Amine (HALS-Stabilisatoren), gehinderte Phenole, Phosphite und/oder aromatische Amine enthalten, zum Einsatz kommen, insbesondere Ester des Pentaerythrits wie z. B. Tetrakis(methylen-3,5-ditertbutyl-4-hydroxyhydrocinnamat)methan und/oder 2,4,8,10,Tetraoxa-3,9-diphosphaspiro-3,9,bisoctadecyloxy[5,5]undecan. Besonders bevorzugt werden nur solche Stabilisatoren eingesetzt, die nur eine hydrolytisch aktive Endgruppe enthalten. Die wirksame Menge an Stabilisatoren liegt dabei im Bereich von 0,1 bis 2 Gew.-%, bezogen auf das Polymer.

Die genannten Co- bzw. Terpolymere sind vorzugsweise modifiziert, um reaktive, insbesondere feuchtigkeitsvernetzende Schmelzklebstoffe zu erhalten. Zur Modifizierung sind auf die oben genannten Co- bzw. Terpolymere ein oder mehrere funktionelle Gruppen aufweisende Monomere aufgepfropft. Die aufzupfropfenden Monomere besitzen dabei vorzugsweise olefinische Doppelbindungen. Insbesondere sind die ein oder mehreren funktionellen Gruppen aufweisende Monomere ausgewählt aus der Gruppe der Carbonsäuren und/oder Carbonsäurederivate (beispielsweise Maleinsäureanhydrid, Maleinsäure, Itaconsäure, Itaconsäureanhydrid, Citronensäureanhydrid, Acrylsäure, Methacrylsäure), der Acrylate (beispielsweise Hydroxymethylacrylat, Hydroxyethylacrylat, Hydroxypropylacrylat, Methylmethacrylat, Ethylmethacrylat, Buthylmethacyrlat, Glycidylmethacylat usw.), der Vinylsilane (beispielsweise Vinyltrimethoxysilan, Vinyltriethoxysilan, Vinyl-tris(2-methoxy-ethoxy-)silan, 3-Methacryloxypropyltrimethoxysilan, 3-Methacryloxypropyltriethoxysilan, Vinyldimethylethoxysilan und/oder Vinylmethyldibutoxysilan, insbesondere Vinyltrimethoxysilan), der Vinylaromaten (beispielsweise Styrol, α-Methylstyrol, Divinylbenzol, Aminostyrol, Styrolsulfonsäure usw.), der cyclischen Imidoester bzw. deren Vinylverbindungen (z. B. Isopentenyl-2-oxazolin, Ricinoloxazolinmaleinat usw.), der Vinylimidazoline (z. B. 1-Vinylimidazol), der Vinylpyrolidone (z. B. N-Vinylpyrrolidon), und/oder der alicyclischen Vinylverbindungen (beispielsweise 4-Vinyl-1-cyclohexen, Vinylcyclohexan, Vinylcyclopentan usw.).

Die modifizierten Polymere weisen besondere Eigenschaften auf, die teilweise auf die Eigenschaften der zur Modifizierung eingesetzten Basispolymere, teilweise auf die verwendeten Pfropfmonomere, teilweise auf das zur Modifikation verwendete Verfahren bzw. eine Kombination zurückzuführen sind.

Ganz besonders bevorzugt handelt es sich bei den zur Modifikation eingesetzten Monomeren um ein oder mehreren Silane, insbesondere sind die Silane auf das Copolymer bzw. Terpolymer aufgepfropft. Silan-modifizierte Polyalphaolefine sind der bevorzugte Vertreter der Klasse der feuchtigkeitsvernetzenden Schmelzklebstoffe.

Das aufzupropfende Silan besitzt vorzugsweise olefinische Doppelbindungen sowie eine bis drei direkt mit dem Siliciumatom verbundene Alkoxygruppen. Insbesondere sind die ein oder mehreren Silane ausgewählt aus der Gruppe umfassend Vinyltrimethoxysilan (VTMO), Vinyltriethoxysilan, Vinyl-tris(2-methoxy-ethoxy)silan, 3-Methacryloxypropyltrimethoxysilan (MEMO; H₂C=C(CH₃)COO(CH₂)₃-Si(OCH₃)₃), 3-Methacryloxypropyltriethoxysilan, Vinyldimethylmethoxysilan und/oder Vinylmethyldibutoxysilan. Ganz besonders bevorzugt ist das Silan Vinyltrimethoxysilan.

Die ein oder mehreren Silane können auf das Basispolymer nach allen Methoden des Standes der Technik aufgepfropft werden, beispielsweise in Lösung oder bevorzugt in der Schmelze, wobei ein Radikalspender in ausreichender Menge eingesetzt wird. Eine geeignete Arbeitsweise kann der DE-OS 40 00 695 entnommen werden, auf die ausdrücklich Bezug genommen wird. Beispielsweise können folgende Radikalspender verwendet werden: Diacylperoxide wie z. B. Dilaurylperoxid oder Didecanoylperoxid, Alkylperester wie z. B. tert-Butylperoxy-2-ethylhexanoat, Perketale wie z. B. 1,1-Di(tert-butylperoxy)-3,3,5-trimethylcyclohexan oder 1,1-Di(tert-butylperoxy)cyclohexan, Dialkylperoxide wie z. B. tert-Butylcumylperoxid, Di(tert.butyl)peroxid oder Dicumylperoxid, C-Radikalspender wie z. B. 3,4-Dimethyl-3,4-diphenylhexan oder 2,3-Dimethyl-2,3-diphenylbutan sowie Azoverbindungen wie z. B. Azobisisobutyronitril, 2,2'-Azo-di(2-acetoxypropan) usw.

In einer besonderen Ausführungsform handelt es sich um ein Lösungsverfahren, wobei aliphatische und/oder aromatische Kohlenwasserstoffe sowie cyclische Ether als Lösungsmittel eingesetzt werden können. Besonders bevorzugt wird als Lösungsmittel mindestens ein aromatischer Kohlenwasserstoff eingesetzt. Geeignete aromatische Kohlenwasserstoffe sind insbesondere Trichlorbenzol, Dichlorbenzol, Toluol und Xylol, besonders bevorzugt wird Xylol eingesetzt. Besonders bevorzugte aliphatische Kohlenwasserstoffe sind beispielsweise Propan, n-Butan, Hexan, Heptan, Cyclohexan und Octan. Besonders bevorzugter cyclischer Ether ist Tetrahydrofuran (THF).

Werden Ether, insbesondere cyclische Ether als Lösungsmittel verwendet, so müssen der verwendete Initiator sowie die Prozessparameter (z. B. Temperatur, Druck, Verweilzeiten usw.) mit besonderer Sorgfalt (aus)gewählt werden, um die Bildung von explosiven Peroxiden der verwendeten Ether zu unterbinden bzw. zu kontrollieren. Insbesondere ist der zusätzliche Einsatz spezieller Inhibitoren (z. B. IONOL) zu erwägen.

Im Fall eines Pfropfprozesses in Lösung liegt die Konzentration des eingesetzten Basispolymers bei mindestens 10 ma-%, bevorzugt bei mindestens 15 ma-%, besonders bevorzugt bei mindestens 20 ma-% und insbesondere bevorzugt bei mindestens 22,5 ma-%. Die Reaktionstemperatur des Pfropfprozesses in Lösung liegt bei 30 bis 200 °C, bevorzugt bei 40 bis 190 °C, besonders bevorzugt bei 50 bis 180 °C und insbesondere bevorzugt bei 55 bis 140 °C. Die Lösungspfropfung erfolgt entweder in diskontinuierlicher oder in kontinuierlicher Weise. Im Fall einer diskontinuierlichen Reaktionsführung wird zunächst das feste Polymer (z. B. als Granulat, Pulver usw.) im verwendeten Lösungsmittel gelöst. Alternativ dazu wird direkt eine konditionierte Polymerisationslösung aus dem Herstellverfahren des Basispolymers verwendet, und auf Reaktionstemperatur gebracht. Es folgt die Zugabe des Monomers/der Monomeren und der/des Radikalstarter(s). In einer besonders bevorzugten Ausführungsform werden Lösungsmittel Basispolymere(e) und Monomer(e) vorgelegt und auf Reaktionstemperatur gebracht, während der/die Radikalstarter über einen definierten Zeitraum kontinuierlich zudosiert wird/werden. Dies hat den Vorteil, dass die stationäre Radikalkonzentration niedrig ist, und daher das Verhältnis von Pfropfreaktion zu Kettenspaltung besonders günstig (d. h. mehr Pfropfreaktion und weniger Kettenspaltung) ausfällt. In einer weiteren besonders bevorzugten Ausführungsform werden Lösungsmittel und Basispolymer(e) vorgelegt und auf Reaktionstemperatur gebracht, während Monomer(e) und Radikalstarter - gemeinsam oder voneinander getrennt- über einen definierten Zeitraum kontinuierlich zudosiert werden. Dies hat den Vorteil, dass sowohl die stationäre Radikalkonzentration als auch die Monomerkonzentration am Reaktionsort niedrig sind, was sowohl die Kettenspaltung als auch die Bildung von Homopolymeren zurückdrängt. Dies ist insbesondere bei der Verwendung von Monomeren wichtig, die bei Reaktionstemperatur stark zur thermisch initiierten (Homo)polymerisation neigen. Ganz besonders bevorzugt wird im Anschluss an die unterschiedlichen definierten Zudosierungszeiträume eine weitere Menge an Radikalstarter(n) zudosiert, um den Gehalt an Restmonomeren in der Reaktionslösung zu minimieren. Als Reaktor wird bevorzugt ein Rührkessel verwendet, die Verwendung alternativer Reaktionsbehälter wie z. B. diskontinuierlicher Knetreaktoren ist ebenfalls möglich, und insbesondere bei niedrigen Reaktionstemperaturen und/oder hohen Polymerkonzentrationen bevorzugt.

Im Fall einer kontinuierlichen Reaktionsführung wird zunächst in einem oder mehreren Vorlagebehältern (z. B. Rührkesseln) das feste Polymer in mindestens einem Lösungsmittel gelöst und anschließend kontinuierlich in den/die Reaktionsbehälter dosiert. In einer alternativen, ebenfalls besonders bevorzugten Ausführungsform, wird direkt eine konditionierte Polymerlösung aus einem Herstellprozess des Basispolymers verwendet. In einer weiteren ebenfalls besonders bevorzugten Ausführungsform wird das feste Polymer (z. B. in Form von Pulver, Granulat, Pellets usw.) zusammen mit mindestens einem Lösungsmittel kontinuierlich in eine (ein- oder mehrwellige) Schneckenmaschine oder einen Kontikneter dosiert, unter Einwirkung von Temperatur und/oder Scherung gelöst, und anschließend kontinuierlich in den/die Reaktionsbehälter dosiert. Als Reaktionsbehälter bzw. Reaktoren für die Durchführung der kontinuierlichen Pfropfreaktion in Lösung kommen kontinuierliche Rührkessel, Rührkesselkaskaden, Strömungsrohre, Strömungsrohre mit Zwangsförderung (z. B. Schneckenmaschinen), Reaktionskneter sowie deren beiliege Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden können. Besonders bevorzugt werden mehrwellige Extruder eingesetzt. Insbesondere bevorzugt zur kontinuierlichen Herstellung der modifizierten Polymere in Lösung ist die Verwendung einer Reaktorkombination aus Strömungsrohr, Strömungsrohr mit Zwangsförderung und kontinuierlichem Rührkessel, wobei bevorzugt entweder im Strömungsrohr mit Zwangsförderung oder im kontinuierlichen Rührkessel auch die Entfernung von Restmonomeren und flüchtigen Neben-/ Abbauprodukten erfolgt.

Alternativ bevorzugt handelt es sich um ein Schmelzeverfahren, wobei mindestens ein Radikalstarter direkt in die Schmelze dosiert wird. Insbesondere liegt bei dieser Verfahrensvariante die Temperatur der Polymermasse zum Zeitpunkt der Zudosierung mindestens eines Radikalstarters oberhalb der SADT (Self accelerating decompositon temperature = Temperatur oberhalb der eine selbstbeschleunigende Zersetzung einsetzen kann) mindestens eines der zudosierten Radikalstarter. Die Reaktionstemperatur des Pfropfprozesses in der Schmelze liegt bei 160 bis 250 °C, bevorzugt bei 165 bis 240 °C, besonders bevorzugt bei 168 bis 235 °C und insbesondere bevorzugt bei 170 bis 230 °C.
Die Schmelzepfropfung erfolgt entweder in diskontinuierlicher oder in kontinuierlicher Fahrweise. Im Fall einer diskontinuierlichen Reaktionsführung wird das feste Polymer (z. B. als Granulat, Pulver, Pellets usw.) zunächst aufgeschmolzen und gegebenenfalls homogenisiert. Alternativ wird direkt eine konditionierte Polymerschmelze aus einem Polymerisationsprozess verwendet und auf Reaktionstemperatur gebracht. Es folgt die Zugabe von Monomere(en) und Radikalstarter(n).
In einer besonderen Ausführungsform werden Monomer(e) und Polymerschmelze homogen durchmischt und auf Reaktionstemperatur gebracht, während der/die Radikalstarter über einen definierten Zeitraum kontinuierlich zudosiert werden. Dies hat den Vorteil, dass die stationäre Radikalkonzentration niedrig ist, und daher das Verhältnis von Pfropfreaktion zu Kettenspaltung besonders günstig (d. h. mehr Pfropfreaktion und weniger Kettenspaltung) ausfällt.
In einer weiteren besonders bevorzugten Ausführungsform wird die Polymerschmelze vorgelegt und homogenisiert, während Monomer(e) und Radikalstarter gemeinsam oder getrennt über einen definierten Zeitraum kontinuierlich zudosiert werden. Dies hat den Vorteil, dass sowohl die stationäre Radikalkonzentration, als auch die Monomerkonzentration am Reaktionsort niedrig bleibt, was sowohl die Kettenspaltung als auch die Bildung von Homopolymer zurückdrängt. Letzteres ist besonders bei der Verwendung von Monomeren wichtig, die bei der vorliegenden Reaktionstemperatur zur thermischen (Homo)polymerisation neigen. Als Reaktor wird bevorzugt ein Rührkessel mit wandgängigem Rühraggregat oder ein Reaktionskneter verwendet.

Im Fall einer kontinuierlichen Reaktionsführung wird zunächst in einem oder mehreren Vorlagebehältern (z. B. Rührkesseln) das feste Polymer aufgeschmolzen und anschließend kontinuierlich in den/die Reaktionsbehälter dosiert. In einer alternativen, ebenfalls besonders bevorzugten Ausführungsform, wird direkt eine konditionierte Polymerschmelze aus einem Polymerisationsprozess verwendet. In einer weiteren ebenfalls besonders bevorzugten Ausführungsform wird das feste Polymer (z. B. in Form von Pulver, Granulat, Pellets usw.) kontinuierlich in eine (ein-oder mehrwellige) Schneckenmaschine oder einen Kontikneter dosiert, unter Einwirkung von Temperatur und/oder Scherung aufgeschmolzen, und anschließend kontinuierlich in den/die Reaktionsbehälter dosiert. Als Reaktionsbehälter bzw. Reaktoren für die Durchführung der kontinuierlichen Pfropfreaktion in der Schmelze kommen kontinuierliche Rührkessel, Rührkesselkaskaden, Strömungsrohre, Strömungsrohre mit Zwangsförderung (z. B. Schneckenmaschinen), Reaktionskneter sowie deren beliebige Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden. Besonders bevorzugt werden mehrwellige Extruder eingesetzt. Insbesondere bevorzugt zur kontinuierlichen Herstellung der modifizierten Polymere in der Schmelze ist die Verwendung einer Reaktorkombination aus Strömungsrohr, Strömungsrohr mit Zwangsförderung und kontinuierlichem Rührkessel, wobei bevorzugt entweder im Strömungsrohr mit Zwangsförderung oder im kontinuierlichen Rührkessel auch die Entfernung von Restmonomeren und flüchtigen Neben-/Abbauprodukten erfolgt. Die eingesetzten Polyolefine weisen (nach vollständiger Abtrennung von unreagiertem Restmonomer) einen durch RFA-Spektroskopie (Röntgenfluoreszenzspektroskopie) bestimmten Siliziumgehalt von mindestens 0,3 ma-%, bevorzugt von mindestens 0,35 ma-%, besonders bevorzugt von mindestens 0,4 ma-% und insbesondere bevorzugt von 0,45 - 2 ma-% auf, wobei weitere besonders bevorzugte Bereiche zwischen 0,5 und 0,75 ma-%, zwischen 0,7 und 0,95 ma-%, zwischen 0,8 und 1,25 ma-% und zwischen 1,1 und 2 ma-% liegen.

Darüber hinaus eignen sich auch reaktive Schmelzklebstoffe auf Basis von Gemischen aus Polyolen, beispielsweise Polyestern, und Isocyanaten. Entsprechende Schmelzklebstoffe sind dem Fachmann beispielsweise aus DE 2401320, EP 0107097, EP 0125009, EP 0340906, DE 3827224 oder WO 99/28363.

In dem erfindungsgemäßen Verfahren wird ein Beutel oder Schlauch einer erfindungsgemäß eingesetzten Verpackungsfolie mit einer vorgegebenen Portion des Verpackungsgutes befüllt, der Füllvorgang unterbrochen, der Beutel oder Schlauch der Verpackungsfolie durch Abquetschen an einem oder beiden Enden verschlossen und verschweißt. Bei dem erfindungsgemäßen Verfahren ist es für den Fachmann überraschend, dass trotz der Beschichtung mit dem Silikon eine dichte Verschweißung gelingt. Der Fachmann würde erwarten, dass die üblicherweise Silikonen zugesprochene Wirkung als Trennmittel ein Verschweißen verhindert bzw. unmöglich macht. Überraschenderweise hat sich herausgestellt, dass dieser Effekt nicht eintritt, sondern sich die mit Silikonen beschichteten Verpackungsfolien gemäß der vorliegenden Erfindung auch in einfacher Weise verschweißen lassen, ohne dass Dichtigkeitsprobleme auftreten. In einer weiteren bevorzugten Ausführungsform wird im erfindungsgemäßen Verfahren ein Beutel oder Schlauch einer erfindungsgemäß eingesetzten Verpackungsfolie mit einer vorgegebenen Portion des Verpackungsgutes befüllt, der Füllvorgang dabei nicht unterbrochen, der Beutel oder Schlauch der Verpackungsfolie durch Abquetschen an einem oder beiden Enden verschlossen, das Verpackungsgut verdrängt und der Beutel oder Schlauch verschweißt.

In dem erfindungsgemäßen Verfahren werden die Verpackungsgüter, insbesondere Schmelzklebstoffe, ganz besonders bevorzugt feuchtigkeitsvernetzende Schmelzklebstoffe, in einen Beutel oder Schlauch der erfindungsgemäß eingesetzten Verpackungsfolie eingebracht.

Der Schlauch der erfindungsgemäß eingesetzten Verpackungsfolie wird erhalten durch Abrollen der Verpackungsfolie von einer Rolle, Übereinanderlegen der beiden Längskanten der Verpackungsfolie und anschließendes Fügen der beiden Längskanten, vorzugsweise durch Ultraschallschweißen. Bei der Ultraschallschweißung werden in der Regel nur die zu verbindenden Oberflächen erwärmt. Die volle Dicke der Folie wird nicht erwärmt.

Als Fügemethoden kommen in herkömmlichen Verfahren thermisches Verschweißen, thermisches Verschweißen bei gleichzeitig angelegtem Druck oder Kleben in Frage. Beim thermischen Verschweißen wird eine Schweißnaht im überlappenden Bereich der Längskanten ausgebildet, indem der Nahtbereich mit Heißluft beaufschlagt wird. Bei thermischem Verschweißen unter Druck wird zusätzlich z.B. über aufeinanderdrückende Backen oder Zangen das Material aufeinander gepresst. Mit den genannten Fügemethoden lassen sich Verbundfolien nur schlecht verschweißen,

Vorzugsweise werden im Falle von Schmelzklebstoffen diese in flüssiger Form eingebracht, das heißt bei Temperaturen oberhalb des Schmelzpunktes der Schmelzklebstoffe. Übliche Abfülltemperaturen liegen daher im Bereich oberhalb von 130 °C, insbesondere bei 150 - 160 °C.

Die durch Abrollen der Verpackungsfolie von einer Rolle, Übereinanderlegen der beiden Längskanten der Verpackungsfolie und anschließendes Fügen der beiden Längskanten erhaltenen Schläuche lassen sich kontinuierlich oder diskontinuierlich befüllen.
Dazu wird der Schlauch gebildet und eine Querverschweißung erzeugt, wobei ein nach einer Seite offener Beutel entsteht. Durch ein Füllrohr wird in dem Fachmann bekannter Weise der flüssige Schmelzklebstoff eingefüllt.
Bei Erreichen des gewünschten Füllgrades wird der Füllvorgang unterbrochen und der Beutel oder Schlauch der Verpackungsfolie durch Abquetschen an einem oder beiden Enden verschlossen und verschweißt.
Das Abquetschen kann auf alle dem Fachmann bekannten Arten erfolgen, beispielsweise mittels zweier paralleler und gegenüberliegender, in ihrem gegenseitigen Abstand veränderlicher Rollen, zwischen denen der Schlauch verläuft. In einer weiteren Ausführungsform erfolgt das Abquetschen mit zwei zueinander parallelen gegeneinander drückenden Backen. Diese Backen können teilweise mit Erhebungen und Vertiefungen versehen sein. Bevorzugt werden beim Abquetschen die Erhebungen auf der einen Seite der Backe in dazu passende Vertiefungen auf der gegenüberliegenden Seite der Backe gepresst.

Neben der Herstellung von Schläuchen ist auch die Herstellung anderer Verpackungsformen möglich. So können beispielsweise (Flach-)Beutel hergestellt werden, indem das erhaltene Schlauchmaterial durch eine zusätzliche Verschweißung quer zur Längsnaht zu einem nach einer Querseite offenen Beutel gefügt wird. Dieser kann befüllt und anschließend durch eine zweite Querverschweißung verschlossen werden.
Im Falle von Beuteln können diese nach allen dem Fachmann bekannten Arten hergestellt werden. Beispielsweise werden Rundbodensäcke durch Anschweißen eines kreisscheibenförmigen Stückes Verbundfolie an einen zylinderförmigen Schlauchabschnitt erhalten. Diese lassen sich durch eine zweite Querverschweißung verschließen.
Ebenfalls sind Ausführungsformen möglich, bei denen die erhaltenen Beutel oder Säcke mit Ventilen versehen sind. In weiteren Ausführungsformen enthalten die Säcke Gase, insbesondere Inertgase wie Stickstoff oder Argon. In einer weiteren Ausführungsform herrscht in der Verpackung Unterdruck.

Das Verschweißen erfolgt durch Ultraschallschweißen. Bei der Ultraschallschweißung werden in der Regel nur die zu verbindenden Oberflächen erwärmt. Die volle Dicke der Folie wird in der Regel nicht erwärmt.
Beim Ultraschallschweißen werden Ultraschallwellen mit einer Frequenz von mehr als 16 kHz in einem Ultraschallgenerator erzeugt, in einem Ultraschallwandler in mechanische Schwingungen übersetzt und mechanisch an eine Sonotrode geleitet. Diese schwingt in Resonanz und bewegt sich periodisch gegen die zu verscheißenden Werkstücke, welche sich auf einem Gegenstück, dem Amboss, befinden. In den Werkstücken wird die von der Sonotrode aufgeprägte mechanische Energie in innere Reibung umgesetzt und in Wärme umgewandelt. Dabei erhitzen sich die zu fügenden Werkstücke und die Materialien werden verscheißt. Im Rahmen der vorliegenden Erfindung kommen insbesondere Verfahren zum Ultraschallschweißen mit feststehender oder rotierender Sonotrode in Frage. Der Amboss kann ebenfalls rotierend oder feststehend ausgeführt sein. In der feststehenden Ausführung können Sonotrode und/oder der Amboss die Form eines Balkens besitzen.

In der Regel werden Silikone als Trenn- und Gleitmittel eingesetzt. Der Fachmann erwartet, dass die Silikone auf den beschriebenen Verpackungsfolien ebenfalls eine trennende Wirkung besitzen und das Verschweißen verhindern. Überraschend wurde jedoch gefunden, dass trotz der Anwesenheit der Silikone auf den Oberflächen Schweißnähte entstehen. Diese Schweißnähte sind überraschenderweise geeignet, auch hohem Druck zu widerstehen.

Beim Ultraschallschweißen spielen mehrere Parameter eine Rolle, insbesondere die zu wählende Ultraschallleistung.

Beispielsweise beträgt die Ultraschallleistung der Sonotrode im erfindungsgemäßen Verfahren bei Einsatz rotierender Sonotroden bevorzugt zwischen 1 W und 1000 W, besonders bevorzugt zwischen 5 W und 100 W und ganz besonders bevorzugt zwischen 8 W und 50 W. Im erfindungsgemäßen Verfahren ist die Frequenz des Ultraschalls bevorzugt größer als 16 kHz und kleiner als 100 kHz, besonders bevorzugt zwischen 16 kHz und 40 kHz.
Die Amplitude, d. h. die maximale räumliche Auslenkung der Sonotrode liegt im erfindungsgemäßen Verfahren zwischen 2 µm und 100 µm, bevorzugt zwischen 10 und 30 µm.

Beim Vorgang des Verschweißens können Sonotrode und Amboss durch ihr Eigengewicht, durch Zusatzgewichte, hydraulisch oder pneumatisch oder motorengetrieben gegeneinander gepresst werden. In einer bevorzugten erfindungsgemäßen Ausführungsform werden Sonotrode und Amboss mit einem Druck gegeneinander gepresst. Dieser Druck entspricht einem Gewicht von 10 g bis 50 kg, bevorzugt zwischen 100 g und 10 kg und ganz besonders bevorzugt zwischen 200 g und 2 kg.
Die Vorschubgeschwindigkeit der Verschweißung liegt im kontinuierlichen Verfahren zwischen 0,1 m/min und 30 m/min, bevorzugt zwischen 0,5 m/min und 10 m/min und ganz besonders bevorzugt zwischen 1 m/min und 5 m/min.

Hinsichtlich der Geometrie von Sonotrode und/oder Ambossrad gibt es grundsätzlich keine Einschränkungen. Im Folgenden wird als "Rad" das Sonotrodenrad und/oder das Ambossrad verstanden.

Das Rad kann in einer Ausführungsform flach oder flach mit eingearbeiteter Struktur oder gekrümmt oder gewinkelt sein. Im Falle eines flachen Rades drückt dieses flächig gegen die Sonotrode bzw. den Amboss. Es ergibt sich eine Schweißfläche. Im Falle eines flachen Rades mit Struktur befinden sich Erhebungen oder Vertiefungen auf den Randflächen. Diese können als linienförmige Rillen ausgearbeitet sein oder in Form von flächigen Erhebungen. Linienförmige Rillen können parallel zum Raddurchmesser oder parallel zur Radachse oder in jedem Winkel eingebracht sein und können sich kreuzen oder teilweise unterbrochen sein. Ist die Ausführungsform der Sonotrode und/oder des Amboss ein Balken, so kann dieser flach oder flach mit eingearbeiteter Struktur oder gekrümmt oder gewinkelt sein. Im Falle eines flachen Amboss drückt dieser flächig gegen die Sonotrode bzw. den Amboss. Es ergibt sich eine Schweißfläche.
Im Falle eines flachen Amboss oder flachen Sonotrode mit Struktur befinden sich Erhebungen oder Vertiefungen auf deren Flächen. Diese können als linienförmige Rillen ausgearbeitet sein oder in Form von flächigen Erhebungen. Linienförmige Rillen können parallel zur Balkenlängsachse oder senkrecht zur Balkenlängsachse oder in jedem Winkel eingebracht sein und können sich kreuzen oder teilweise unterbrochen sein.

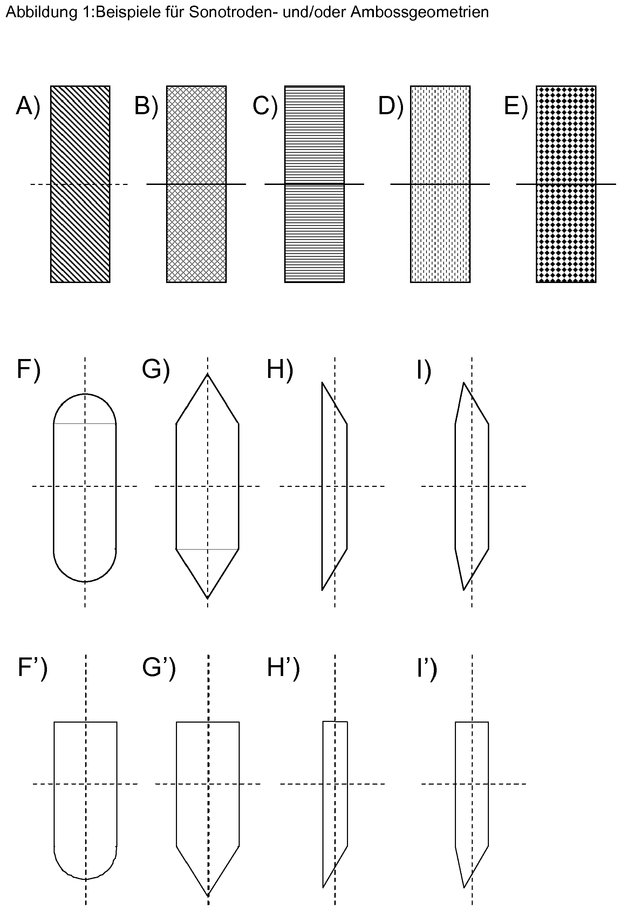

Abbildung 1 zeigt Beispiele für die Strukturierung flächiger Sonotroden- und/oder Ambossräder bzw. feststehender Sonotroden- und/oder Ambossbalken mit verschiedenen linienförmigen Rillen und flächigen Erhebungen sowie Beispiele für unterschiedliche Geometrien der Sonotroden- und/oder Ambossräder in einer Seitenansicht:
Linieförmige Rillen:
A) in beliebigen Winkel zur Radachse,
B) sich kreuzend
C) parallel zur Radachse,
D) teilweise unterbrochen.
E) Flächige Erhebungen
F) gekrümmtes Rad,
G) gewinkeltes Rad mit achsen-paralleler und achsen-senkrechter Symmetrieachse,
H)) gewinkeltes Rad mit achsen-paralleler Symmetrieachse,
I) gewinkeltes Rad mit zwei unterschiedlichen Winkeln gegen die achsensenkrechte Richtung.

Im Falle balkenförmiger Sonotroden bzw. Ambosse ergibt sich eine entsprechende Geometrie im Querschnitt wie unter F') bis I') gezeigt.

Im Falle feststehender Sonotroden mit scheibenförmigen, feststehenden Ambossen ergibt sich eine entsprechende Geometrie wie im Querschnitt wie unter F) bis I) gezeigt.

In einer bevorzugten Ausführungsform entspricht das Ambossrad einem für Flächenverschweißungen geeigneten Werkstück der Abbildung 1, Beispiele A) bis D). Die bevorzugt Breite des Rades liegt zwischen 1 mm und 10 mm, besonders bevorzugt zwischen 1 mm und 5 mm. Bevorzugt besitzt das Rad ein Muster aus linienförmigen Rillen. Der Fachmann hätte vielmehr erwartet, dass flächige Verschweißungen besonders haltbare Verschweißungen ergeben, beziehungsweise, dass breitere Rollen zu haltbareren Verschweißungen führen.

In einem kontinuierlichen Produktionsprozess ist nicht nur die Herstellung einer haltbaren und dauerhaften Schweißnaht relevant. Auch ist es für eine Verpackung wichtig, dass die Ränder der Verpackung maßhaltig und bündig ausgeführt werden. Durch Toleranzen in der Bahnführung, die insbesondere bei den Prozessschritten des Abrollens der Verpackungsfolie von einer Rolle und dem Übereinanderlegen der beiden Längskanten der Verpackungsfolie auftreten können, sind jedoch Abweichungen in der Überdeckung beider Längskanten der Verpackungsfolie möglich. Weiterhin wird der Folienbereich zwischen Schweißnaht und Folienlängskante für die Stabilität der Verschweißung nicht benötigt und ist aus optischen Gründen möglichst zu vermeiden. Daher ist es vorteilhaft, derartige Überstände zu entfernen. Dem Fachmann bekannt sind sogenannte Schneidräder, die durch Werkstücke trennen können, insbesondere durch Ultraschallschneiden. Auf diese Weise können Überstände an Folien einfach abgeschnitten werden.

Überraschend wurde gefunden, dass Schneidräder, die den gewinkelten Ambossrädern der Abbildung 1, Beispiele G) bis I) entsprechen, auch zum Verschweißen der mit Silikonen beschichteten Verbundfolien geeignet sind. Dies ist in erster Hinsicht überraschend, da dem Fachmann bekannt ist, dass Silikonbeschichtungen eine trennende Wirkung besitzen und in zweiter Hinsicht, da Schneidräder im Gegensatz zu den flächig verschweißenden Ambossrädern eine sehr geringe Auflagefläche besitzen, die gerade zum Abtrennen und nicht zum Fügen von Materialien konzipiert ist.

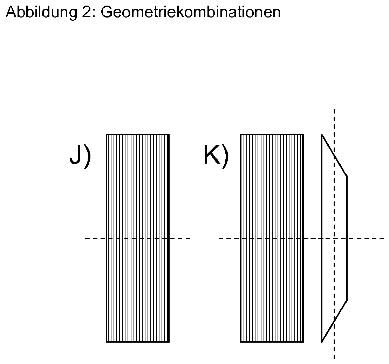

Darüber hinaus sind auch Kombinationen mehrerer, auch verschiedener, Sonotroden- und/oder Ambossräder möglich. So kann beispielsweise ein Ambossrad mit linienförmigen Rillen J) mit einem gewinkelten Rad mit achsen-paralleler Symmetrieachse zu einer Anordnung K) kombiniert werden (siehe Abbildung 2).

Überraschend wurde gefunden, dass in einer ganz besonders bevorzugten Ausführungsform auf die Verwendung eines Ambossrades ausgewählt aus A) bis E) verzichtet werden kann und lediglich ein Rad ausgewählt aus Beispiel G), H) oder I) zu haltbaren Verschweißungen führt.

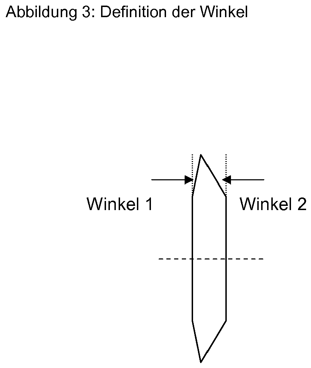

Im Falle der Querverschweißung wird ein Rad gemäß Beispiel G) besonders bevorzugt eingesetzt, wobei insbesondere bevorzugt die Winkel 1 und 2 gleich sind (siehe Abbildung 3 zur Definition der Winkel).
Der Durchmesser von Sonotroden- und Ambossrad beträgt insbesondere zwischen 5 mm und 100 mm.

In einer weiteren bevorzugten Ausführungsform des erfindungsgemäßen Verfahrens wird eine balkenförmige Sonotrode verwendet. Die Breite der Sonotrode beträgt bevorzugt zwischen 50 mm und 1000 mm, besonders bevorzugt zwischen 100 mm und 500 mm. Die Höhe der Sonotrode beträgt zwischen 0,01 mm und 50 mm, ganz besonders bevorzugt 10 mm bis 200 mm.
Die Struktur der Balkensonotrode und des balkenförmigen Amboss entspricht den Abbildungen 1 A) bis E) bei flächigen Verschweißungen.
In einer besonderen Ausführungsform erzeugt die Balkensonotrode wie in Abbildungen 1 F') bis I') eine linienförmige Schweißnaht. Die Breite dieser Sonotrode beträgt bevorzugt zwischen 50 mm und 1000 mm, besonders bevorzugt zwischen 100 mm und 500 mm. Im Falle eines Querschnitts der Abbildung 1 F') betragen die Krümmungsradien 0,01 mm bis 1 mm. Die Winkel der Querschnitte 1 G') bis I') betragen 10° bis 80°, bevorzugt 20° bis 70°.
Besonders vorteilhaft lassen sich mit derart linienförmigen Sonotroden Verschweißungen zwischen zwei Folien des erfindungsgemäßen Aufbaus herstellen und gleichzeitig die Folien des erfindungsgemäßen Aufbaus vor und hinter der Nahtstelle abtrennen.

Der Fachmann hätte vielmehr erwartet, dass derart linienförmige Verschweißungen keine haltbaren Verschweißungen ergeben, beziehungsweise, dass nicht gleichzeitig haltbare Verschweißungen erhalten werden und gleichzeitig überstehende Folie abgetrennt wird.

Die Ultraschallleistung der balkenförmigen Sonotroden beträgt im erfindungsgemäßen Verfahren bevorzugt zwischen 1 W und 5000 W, besonders bevorzugt zwischen 100 W und 3000 W und ganz besonders bevorzugt zwischen 500 W und 2500 W. Im erfindungsgemäßen Verfahren ist die Frequenz des Ultraschalls bevorzugt größer als 16 kHz und kleiner als 100 kHz, besonders bevorzugt zwischen 16 kHz und 40 kHz.
Die Amplitude, d. h. die maximale räumliche Auslenkung der Sonotrode liegt im erfindungsgemäßen Verfahren zwischen 2 µm und 100 µm, bevorzugt zwischen 10 und 30 µm.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

### Beispiel 1:

Verschweißt wurde eine Verbundfolie bestehend aus einer mit Silikon beschichteten PP (70 µm)/Aluminium (9 µm)/PP(70 µm)-Verbundfolie. Die Silikonschicht wurde aus einer Mischung aus 9 Gew.-% TEGO RC351, 89 Gew.-% TEGO RC702 und 2 Gew.-% TEGO Photoinitiator A18 hergestellt. Die Dicke der Beschichtung betrug rund 1 g/m2. Die Verbundfolie wurde so auf sich zurück gefaltet, dass die Silikonseite mit der Silikonseite überlappte. In diesem Bereich wurde eine Ultraschall-Schweißnaht angebracht.

Verwendet wurde ein gewinkeltes Ambossrad mit einem Durchmesser von 65 mm, Winkel 1= 15° und Winkel 2 = 75° (siehe Definition gemäß Abbildung 3).

Schweißparameter: Leistung = 25 W, Druck entsprechend 1,2 kg Gewicht, Frequenz = 20 KHz, Amplitude zwischen 10 µm und 25 µm, Vorschubgeschwindigkeit beträgt 2 m/min.

Wichtig für das erfindungsgemäße Verfahren ist eine haltbare Schweißnaht, die auch unter Druckbelastung nicht aufplatzt.

Dazu wurde in einem Drucktest die Folie dichtend in eine ringförmige Halterung eingespannt und mit einem Druck von 0,8 bar beaufschlagt, was zu einer Scherbeanspruchung der Schweißnaht von innen führt. Sowohl die Schweißnaht als auch die Folie widerstehen dem Druck. Bei weiterer Erhöhung des Drucks auf bis zu 1 bar, bleibt die Schweißnaht noch immer intakt, jedoch beginnt die Verbundfolie sich aufzudehnen.

Weiter wurden Zugkräfte sowohl an der nicht verschweißten Verbundfolie als auch an zwei verschweißten Stücken dieser Verbundfolie mit einer Zugprüfmaschine in Anlehnung an die Methode DIN EN ISO 527-3 gemessen. In beiden Fällen ergeben sich Zugkräfte von 60 N/inch.

### Beispiel 2:

Verschweißt wurde eine Verbundfolie bestehend aus einer mit Silikon beschichteten PP (70 µm)/Aluminium (9 µm)/PP(70 µm)-Verbundfolie. Die Silikonschicht wurde aus einer Mischung aus 9 Gew.-% TEGO RC351, 89 Gew.-% TEGO RC702 und 2 Gew.-% TEGO Photoinitiator A18 hergestellt. Die Verbundfolie wurde so auf sich zurück gefaltet, dass die Silikonseite mit der Silikonseite überlappte. In diesem Bereich wurde eine Ultraschall-Schweißnaht angebracht.

Verwendet wurde eine balkenförmige, 250 mm breite Sonotrode mit

Waffelstruktur in einer Ultraschallschweißmaschine HS dialog 4000 mit Amboss der Fa. Hermann Ultraschall, betrieben bei 20 kHz. Die Auslenkung der Sonotrode in Schwingungsrichtung betrug 21 µm, die Schweißdauer betrug 250 ms bei einer Leistung von 1500 W bei einem Anpressdruck von 6 bar, wobei eine Energie von 320 J in die Naht eingebracht wurde.

### Dichtigkeitsprüfung:

Der vorgefertigte Beutel wurde mit gefärbtem Wasser befüllt. Das Wasser drang nicht in die Nähte oder durch die Nähte hindurch, die erhaltene Naht war also auslaufdicht gegen Flüssigkeiten. Eine intentionell mit eingeschlossene Gasblase ließ sich manuell nicht herauspressen. Die Beutel trennen sich nicht.

### Befüllungstest:

In einem zweiten Versuch wurde der erhaltene Beutel mit 160 °C heißem Vestoplast® 206 (silanmodifiziertes Polyolefin der Evonik Industries AG) befüllt und verschlossen (Ultraschallverschweißung wie oben gezeigt).Die Nähte blieben dicht und lösten sich nicht auf. Der Beutel konnte nach Erkalten der Schmelze rückstandsfrei vom Polyolefin entfernt werden. Nach 1 Jahr Lagerdauer der befüllten Beutel war keine Kontamination mit Luft oder Feuchtigkeit erkennbar (keine Vernetzung des Polymers). Eine intentionell mit eingeschlossene Gasblase ließ sich manuell nicht herauspressen, die Nähte blieben auch bei Lagerung stabil.

### Beispiel 3:

Verwendet wurde die Folie aus Beispiel 2. Die Verbundfolie wurde so auf sich zurück gefaltet, dass die Silikonseite mit der Silikonseite überlappte. In diesem Bereich wurde eine Ultraschall-Schweißnaht angebracht.

Verwendet wurde ein balkenförmiger Schneidamboss aus Abbildung 1G' mit einem Winkel von 120°, welche mit 5 bar angepresst wurde. Die Schweißdauer betrug 230 ms bei 2000 W, wobei 360 J Energie in die Schweißnaht eingebracht wurde. Gleichzeitig wird die von der Naht überstehende Folie von der Naht abgetrennt.

### Dichtigkeitsprüfung:

Der vorgefertigte Beutel wurde mit gefärbtem Wasser befüllt. Das Wasser drang nicht in die Nähte oder durch die Nähte hindurch, die erhaltene Naht war also auslaufdicht gegen Flüssigkeiten. Eine intentionell mit eingeschlossene Gasblase ließ sich manuell nicht herauspressen. Die Beutel trennen sich nicht.

### Befüllungstest:

In einem zweiten Versuch wurde der erhaltene Beutel mit 160°C heißem Vestoplast® 206 (silanmodifiziertes Polyolefin der Evonik Industries AG) befüllt und verschlossen (Ultraschallverschweißung wie oben gezeigt).Die Nähte blieben dicht und lösten sich nicht auf. Der Beutel konnte nach Erkalten der Schmelze rückstandsfrei vom Polyolefin entfernt werden. Nach 1 Jahr Lagerdauer der befüllten Beutel war keine Kontamination mit Luft oder Feuchtigkeit erkennbar (keine Vernetzung des Polymers). Eine intentionell mit eingeschlossene Gasblase ließ sich manuell nicht herauspressen, die Nähte blieben auch bei Lagerung stabil. Die Beutel trennen sich nicht.

### Beispiel 4

Verwendet wurde die Folie aus Beispiel 2. Die Dicke der Beschichtung betrug rund 0,5 g/m2. Die Verbundfolie wurde so auf sich zurück gefaltet, dass die Silikonseite mit der Silikonseite überlappte. In diesem Bereich wurde eine Ultraschall-Schweißnaht angebracht.

Verwendet wurde ein scheibenförmiger Schneidamboss mit 2,5 mm Durchmesser aus Abbildung 1G mit einem Winkel von 120°, welche mit 5 bar angepresst wurde.

Die Sonotrode wurde kontinuierlich mit einem 35 kHz Generator bei 600 W betrieben.

Gleichzeitig wird die von der Naht überstehende Folie von der Naht abgetrennt.

### Dichtigkeitsprüfung:

Der vorgefertigte Beutel wurde mit gefärbtem Wasser befüllt. Das Wasser drang nicht in die Nähte oder durch die Nähte hindurch, die erhaltene Naht war also auslaufdicht gegen Flüssigkeiten. Eine intentionell mit eingeschlossene Gasblase ließ sich manuell nicht herauspressen.

### Befüllungstest:

In einem zweiten Versuch wurde der erhaltene Beutel mit 160°C heißem Vestoplast® 206 (silanmodifiziertes Polyolefin der Evonik Industries AG) befüllt und verschlossen (Ultraschallverschweißung wie oben gezeigt).Die Nähte blieben dicht und lösten sich nicht auf. Der Beutel konnte nach Erkalten der Schmelze rückstandsfrei vom Polyolefin entfernt werden. Nach 1 Jahr Lagerdauer der befüllten Beutel war keine Kontamination mit Luft oder Feuchtigkeit erkennbar (keine Vernetzung des Polymers). Eine intentionell mit eingeschlossene Gasblase ließ sich manuell nicht herauspressen, die Nähte blieben auch bei Lagerung stabil.

### Beispiel 5

Verwendet wurde die Folie aus Beispiel 2. Die Dicke der Beschichtung betrug rund 0,5 g/m2. Die Verbundfolie wurde so auf sich zurück gefaltet, dass die Silikonseite mit der Silikonseite überlappte. In diesem Bereich wurde eine Ultraschall-Schweißnaht angebracht.

Verwendet wurde eine flächenförmige Balkensonotrode mit 5 mm Höhe und 250 mm Breite und Waffelstruktur aus Abbildung 1 B).

Die Sonotrode wurde betrieben für 580 ms mit einem 20 kHz Generator bei 2100 W, wobei eine Energie von 700 J in die Schweißnaht eingebracht wurde.

### Dichtigkeitsprüfung:

Der vorgefertigte Beutel wurde mit gefärbtem Wasser befüllt. Das Wasser drang nicht in die Nähte oder durch die Nähte hindurch, die erhaltene Naht war also auslaufdicht gegen Flüssigkeiten. Eine intentionell mit eingeschlossene Gasblase ließ sich manuell nicht herauspressen. Die Beutel trennen sich nicht.

### Befüllungstest:

In einem zweiten Versuch wurde der erhaltene Beutel mit 160°C heißem Vestoplast® 206 (silanmodifiziertes Polyolefin der Evonik Industries AG) befüllt und verschlossen (Ultraschallverschweißung wie oben gezeigt).Die Nähte blieben dicht und lösten sich nicht auf. Der Beutel konnte nach Erkalten der Schmelze rückstandsfrei vom Polyolefin entfernt werden. Nach 1 Jahr Lagerdauer der befüllten Beutel war keine Kontamination mit Luft oder Feuchtigkeit erkennbar (keine Vernetzung des Polymers). Eine intentionell mit eingeschlossene Gasblase ließ sich manuell nicht herauspressen, die Nähte blieben auch bei Lagerung stabil. Die Beutel trennen sich nicht.

### Beispiel 6:

Verschweißt wurde eine Verbundfolie bestehend aus einer mit Silikon beschichteten PP Folie von 140 µm Dicke. Die Silikonschicht wurde aus einer Mischung aus 9 Gew.-% TEGO RC351, 89 Gew.-% TEGO RC702 und 2 Gew.-% TEGO Photoinitiator A18 hergestellt. Die Folie wurde so auf sich zurück gefaltet, dass die Silikonseite mit der Silikonseite überlappte. In diesem Bereich wurde eine Ultraschall-Schweißnaht angebracht.

Verwendet wurde eine balkenförmige, 250 mm breite Sonotrode mit Waffelstruktur in einer Ultraschallschweißmaschine HS dialog 4000 mit Amboss der Fa. Hermann Ultraschall, betrieben bei 20 kHz. Die Auslenkung der Sonotrode in Schwingungsrichtung betrug 21 µm, die Schweißdauer betrug 250 ms bei einer Leistung von 1400 W bei einem Anpressdruck von 6 bar, wobei eine Energie von 310 J in die Naht eingebracht wurde.

### Dichtigkeitsprüfung:

Der vorgefertigte Beutel wurde mit gefärbtem Wasser befüllt. Das Wasser drang nicht in die Nähte oder durch die Nähte hindurch, die erhaltene Naht war also auslaufdicht gegen Flüssigkeiten. Eine intentionell mit eingeschlossene Gasblase ließ sich manuell nicht herauspressen. Die Beutel trennen sich nicht.

### Befüllungstest:

In einem zweiten Versuch wurde der erhaltene Beutel mit 160°C heißem Vestoplast® 206 (silanmodifiziertes Polyolefin der Evonik Industries AG) befüllt und verschlossen (Ultraschallverschweißung wie oben gezeigt).Die Nähte blieben dicht und lösten sich nicht auf. Der Beutel konnte nach Erkalten der Schmelze rückstandsfrei vom Polyolefin entfernt werden.

### Beispiel 7

Verschweißt wurde eine Verbundfolie bestehend aus einer mit Silikon beschichteten PE Folie von 100 µm Dicke. Die Silikonschicht wurde aus einer Mischung aus 9 Gew.-% TEGO RC351, 89 Gew.-% TEGO RC702 und 2 Gew.-% TEGO Photoinitiator A18 hergestellt. Die Folie wurde so auf sich zurück gefaltet, dass die Silikonseite mit der Silikonseite überlappte. In diesem Bereich wurde eine Ultraschall-Schweißnaht angebracht.

Verwendet wurde eine balkenförmige, 250 mm breite Sonotrode mit Waffelstruktur in einer Ultraschallschweißmaschine HS dialog 4000 mit Amboss der Fa. Hermann Ultraschall, betrieben bei 20 kHz. Die Auslenkung der Sonotrode in Schwingungsrichtung betrug 21 µm, die Schweißdauer betrug 250 ms bei einer Leistung von 850 W bei einem Anpressdruck von 6 bar, wobei eine Energie von 200 J in die Naht eingebracht wurde.

### Dichtigkeitsprüfung:

Der vorgefertigte Beutel wurde mit gefärbtem Wasser befüllt. Das Wasser drang nicht in die Nähte oder durch die Nähte hindurch, die erhaltene Naht war also auslaufdicht gegen Flüssigkeiten. Eine intentionell mit eingeschlossene Gasblase ließ sich manuell nicht herauspressen. Die Beutel trennen sich nicht.

### Befüllungstest:

In einem zweiten Versuch wurde der erhaltene Beutel mit 110°C heißem Vestoplast® 206 (silanmodifiziertes Polyolefin der Evonik Industries AG) befüllt und verschlossen (Ultraschallverschweißung wie oben gezeigt).Die Nähte blieben dicht und lösten sich nicht auf. Der Beutel konnte nach Erkalten der Schmelze rückstandsfrei vom Polyolefin entfernt werden.

## Patentansprüche

1. Verfahren zum Verpacken von Verpackungsgütern mit Verpackungsfolien mit wenigstens einer Schicht umfassend Thermoplasten, wobei auf der dem Verpackungsgut zugewandten Seite der Verpackungsfolie eine Beschichtung umfassend mindestens ein Silikon aufgebracht ist, zur Verpackung von Verpackungsgütern, **dadurch gekennzeichnet, dass** es sich bei dem Silikon um ein (Meth)acrylatgruppen enthaltendes Polysiloxan handelt, wobei ein Beutel oder Schlauch der Verpackungsfolie mit einer vorgegeben Portion des Verpackungsgutes befüllt wird, der Füllvorgang unterbrochen wird und der Beutel oder Schlauch der Verpackungsfolie durch Abquetschen an einem oder beiden Enden verschlossen und verschweißt wird oder ein Beutel oder Schlauch der Verpackungsfolie mit einer vorgegebenen Portion des Verpackungsgutes befüllt wird, der Füllvorgang dabei nicht unterbrochen wird und der Beutel oder Schlauch der Verpackungsfolie durch Abquetschen an einem oder beiden Enden verschlossen, das Verpackungsgut verdrängt und der Beutel oder Schlauch verschweißt wird, wobei die Verpackungsfolie durch Einsatz von Ultraschall verschweißt wird.

2. Verfahren gemäß Anspruch 1, **dadurch gekennzeichnet, dass** die Verpackungsfolie zwei Schichten mindestens eines Polymers und eine zwischen den Schichten liegenden Metalllage aufweist, wobei mindestens eine der zwei Schichten mindestens eines Polymers mindestens einen Thermoplasten umfasst.

3. Verfahren gemäß Anspruch 2, **dadurch gekennzeichnet, dass** die Metalllage aus Leichtmetall, insbesondere Aluminium, besteht.

4. Verfahren gemäß einem oder mehreren der Ansprüche 1 bis 3, **dadurch gekennzeichnet, dass** der Thermoplast ausgewählt ist aus der Gruppe umfassend Polyolefine, Polyamide, Polybutadien, Polyester, Polycarbonate, Polyvinylacetat, thermoplastische Polyacrylamide, Polyacrylonitril, Polymethylpenten, Polyphenylensulfid, Polyurethane, Styrolacrylonitril, Acrylonitril- Butadien-Styrol, Styrolbutadien-Gummi, Polyethylenterephthalat.

5. Verfahren gemäß Anspruch 1, **dadurch gekennzeichnet, dass** das Verpackungsgut ausgewählt ist aus Schmelzklebstoffen.

6. Verfahren gemäß Anspruch 5, **dadurch gekennzeichnet, dass** es sich bei dem Verpackungsgut um reaktive, insbesondere feuchtigkeitsvernetzende Schmelzklebstoffe handelt.

## Claims

1. Process for, with use of packaging films with at least one layer comprising thermoplastic, the packaging of products requiring packaging, where a coating comprising at least one silicone has been applied on that side of the packaging film that faces towards the product requiring packaging for the packaging of products requiring packaging, **characterized in that** the silicone involves a polysiloxane comprising (meth)acrylate groups, where a prescribed portion of the product requiring packaging is charged to a bag or tube of the packaging film, the charging procedure is interrupted, and the bag or tube of the packaging film is closed by squeezing at one or both ends and is welded, or a prescribed portion of the product requiring packaging is charged to a bag or tube of the packaging film, the charging procedure is not interrupted here, and the bag or tube of the packaging film is closed by squeezing at one or both ends, the product requiring packaging is displaced and the bag or tube is welded, where the packaging film is welded by using ultrasound.

2. Process according to Claim 1, **characterized in that** the packaging film has two layers of at least one polymer and, located between the layers, a metal sublayer, where at least one of the two layers of at least one polymer comprises at least one thermoplastic.

3. Process according to Claim 2, **characterized in that** the metal sublayer is composed of lightweight metal, in particular aluminium.

4. Process according to one or more of Claims 1 to 3, **characterized in that** the thermoplastic is one selected from the group consisting of polyolefins, polyamides, polybutadiene, polyesters, polycarbonates, polyvinyl acetate, thermoplastic polyacrylamides, polyacrylonitrile, polymethylpentene, polyphenylene sulphide, polyurethanes, styrene-acrylonitrile, acrylonitrile- butadiene-styrene, styrene-butadiene rubber, polyethylene terephthalate.

5. Process according to Claim 1, **characterized in that** the product requiring packaging is one selected from hot-melt adhesives.

6. Process according to Claim 5, **characterized in that** the product requiring packaging involves reactive, in particular moisture-crosslinking hot-melt adhesives.

## Revendications

1. Procédé d'emballage de produits à emballer avec des feuilles d'emballage d'au moins une couche contenant des thermoplastiques, où on applique au moins un silicone sur la face du revêtement orientée vers le produit à emballer, pour emballer des produits à emballer, **caractérisé en ce que** le silicone est un polysiloxane contenant des groupes (méth)acrylates, un sac ou un tube de la feuille d'emballage est rempli d'une partie prédéterminée du produit à emballer, le procédé de remplissage est interrompu et le sac ou le tube de la feuille d'emballage est fermé et soudé par compression à une ou à ses deux extrémités, ou un sac ou un tube de la feuille d'emballage est rempli d'une partie prédéterminée du produit à emballer, le procédé de remplissage n'est pas interrompu et le sac ou le tube de la feuille d'emballage est fermé et soudé par compression à une ou à ses deux extrémités, le produit à emballer est déplacé et le sac ou le tube de la feuille d'emballage est soudé, la feuille d'emballage étant soudée par utilisation d'ultrasons.

2. Procédé selon la revendication 1, **caractérisé en ce que** la feuille d'emballage présente deux couches d'au moins un polymère et une couche métallique entre les couches, au moins une des deux couches d'au moins un polymère contenant un thermoplastique.

3. Procédé selon la revendication 2, **caractérisé en ce que** la couche métallique est constituée d'un métal léger, en particulier de l'aluminium.

4. Procédé selon au moins une des revendications 1 à 3, **caractérisé en ce que** le thermoplastique est choisi dans le groupe comprenant une polyoléfine, un polyamide, un polybutadiène, un polyester, un polycarbonate, un polyacétate de vinyle, un polyacrylamide thermoplastique, un polyacrylonitrile, un polyméthylpentène, un polysulfure de phénylène, un polyuréthane, un styrène-acrylonitrile, un acrylonitrile-butadiène-styrène, un caoutchouc styrène-butadiène, un polyéthylène téréphtalate.

5. Procédé selon la revendication 1, **caractérisé en ce que** le produit à emballer est choisi parmi des adhésifs thermofusibles.

6. Procédé selon la revendication 5, **caractérisé en ce que** le produit à emballer est des adhésifs thermofusibles réactifs, en particulier réticulants à l'humidité.
